# EUROPÄISCHE PATENTANMELDUNG

(11) **EP 3 967 427 A1**
(43) Veröffentlichungstag der Anmeldung: **16.03.2022**
(21) Anmeldenummer: 20195312.2
(22) Anmeldetag: 09.09.2020
(51) Int. Cl.: B22F 10/25, B22F 12/30, B22F 12/37, B23Q 3/10, B29C 64/153, B29C 64/245, B33Y 30/00, F16B 35/00, F16B 35/06, B22F 12/17, B29C 64/295

(54) **BAUPLATTFORMVORRICHTUNG**

(71) Anmelder: Peter Lehmann AG, 3552 Bärau (CH)
(72) Erfinder: HULLIGER, Urs, 4543 Deitingen (CH); LEHMANN, Hansruedi, 3532 Mirchel (CH); SELVA, Nicolai, 8645 Rapperswil-Jona (CH)
(74) Vertreter: AMMANN PATENTANWÄLTE AG

(57) **Zusammenfassung**

Um eine Beeinträchtigung der Positionierungspräzision einer Positionierungsvorrichtung (21) zu vermeiden, auf der sich eine Bauplattform (1) in Form einer Plattform oder mindestens einer Befestigungsvorkehrung zum Anbringen eines Aufspannmittels, wobei dabei auch eine Plattform denkbar ist, befindet, wird eine Isolation (25, 29) zwischen der Bauplattform (1) und den darunterliegenden Teilen (23) angeordnet, die in thermisch engem Kontakt mit der Positionierungsvorrichtung (Drehtisch) (21) stehen. Insgesamt ergibt sich damit eine Bauplattformvorrichtung (37), die eine thermische Trennung (49) zwischen einem Bereich, in dem die additive Fertigung bei erhöhten Temperaturen stattfindet, und einem Bereich tiefer Temperatur mit der Positionierungsvorrichtung (21) bietet.

## Beschreibung

Die vorliegende Erfindung bezieht sich auf eine Bauplattformvorrichtung gemäss Oberbegriff des Anspruchs 1.

Drehtische werden eingesetzt, um auf Werkzeugmaschinen wie z.B. Bearbeitungszentren, Schleifmaschinen, Graviermaschinen rotatorische Bewegungen auszuführen. Durch einen Drehtisch ist es möglich, das Werkstück in eine Position zu bringen, in der die Bearbeitungszone dem Werkzeug besser oder überhaupt zugänglich ist. Oft ist es dabei nötig, das Werkstück um zwei Achsen zu schwenken. Derartige Tische sind bekannt, sowohl in der Maschinenkonstruktion eingebaut als auch auf dem Maschinentisch aufgesetzt bzw. nachgerüstet.

Die Konstruktion derartiger Drehtische ist relativ aufwendig. Es herrschen enge Platzverhältnisse und während der Bearbeitung harsche Umgebungsbedingungen wegen herumfliegender Werkstückspäne und -splitter und herumspritzender Hilfsflüssigkeiten. Bei motorisierten Drehtischen, die für die vollautomatische Bearbeitung nötig sind, muss daher ein hoher Aufwand getrieben werden, um die empfindlichen Innenteile vor äusseren Einwirkungen zu schützen.

Auch bei der additiven Fertigung finden Drehtische, oder allgemein Positionierungsvorrichtungen, um ein Werkstück relativ zu einem Werkzeug oder einem Bearbeitungspunkt zu positionieren, Anwendung. Ein derartiges Verfahren ist das Laserauftragschweissen. Allgemein ausgedrückt wird bei diesem Verfahren an einer Stelle gezielt eine genügend hohe Temperatur erzeugt, um ein bestimmtes Baumaterial zu schmelzen oder zu sintern. Das Baumaterial wird zum Bespiel in Pulverform gezielt diesem Punkt höherer Temperatur zugeführt. Durch gesteuertes Verschieben der erhitzten Stelle wird eine Linie oder Raupe von verfestigtem Baumaterial erzeugt. Dieses Verfahren ist an sich bekannt, auch unter dem Kürzel LMD (engl.: *laser melting deposition*)*.* Wie schon aus diesem Namen hervorgeht, ist ein Laser das bevorzugte Mittel zum gezielten Erhitzen am Arbeitspunkt, wobei andere gerichtete Energieformen (z. B. Elektronenstrahl, Mikrowellen) grundsätzlich denkbar sind.

Drehtische als bewährte Mittel zum Positionieren von Werkstücken bieten sich an, die Arbeitsplattform im Laserauftragschweissverfahren zu bewegen. Vorteilhaft dabei ist die Präzision und Schnelligkeit der Positionierung, die Drehtische bei subtraktiven Bearbeitungsverfahren erbringen müssen. Allerdings hat sich gezeigt, dass die besonderen Arbeitsbedingungen bei additiven Fertigungsverfahren die Genauigkeit der Positionierung durch die bekannten Drehtische beeinträchtigen können. Es zeichnet sich sogar ab, dass diese Prozesswärme zu einem Ausfall dieser Positionierungsvorrichtungen führen kann. Wenn zusätzliche Heizungen vorgesehen werden, verschärft sich das Risiko eines solchen Ausfalls weiter.

Eine Aufgabe der vorliegenden Erfindung besteht darin, eine Bauplattformvorrichtung anzugeben, bei der die Positionierungsgenauigkeit mittels einer Positionierungsvorrichtung, bevorzugt einem Drehtisch, verbessert ist.

Eine solche Bauplattformvorrichtung, also eine Vorrichtung umfassend eine Bauplattform ist im Anspruch 1 angegeben. Die weiteren Ansprüche geben bevorzugte Ausführungsformen und Anwendungen an.

Die Bauplattform ist bevorzugt für die additive Fertigung geeignet, denkbar ist es aber auch, auf ihr Bearbeitungsvorgänge anderer Art, insbesondere der subtraktiven Bearbeitung, auszuführen. Eine Bauplattform kann daher sein:
- eine Plattform, also eine im Wesentlichen plattenförmige Komponente; und/oder
- mindestens eine Befestigungsvorkehrung wie eine Anordnung Löcher, bevorzugt mit Gewinde, in dem Isolationsteil, so dass ein Werkstück für die Bearbeitung oder eine Spannvorrichtung, z.B. ein Schraubstock, Formbacken oder Spannpratzen, angebracht werden kann.

Denkbar ist auch die Anbringung einer Plattform an den Befestigungsvorkehrungen.

Während bei additiven Fertigungsverfahren nur geringe mechanische Kräfte während des Prozesses auf die Bauplattform und damit die Positionierungsvorrichtung für die Bauplattform, namentlich einen Drehtisch, einwirken, treten bei Schmelz- oder Sinterverfahren hohe Temperaturen an der Bauplattform auf. Durch starke Temperaturänderungen entstehen jedoch Dimensionsänderungen in den Komponenten der Positionierungsvorrichtung. Andererseits ist es für eine hohe Qualität des hergestellten Werkstücks erforderlich, dass die Bauplattform vor dem Starten des Prozesses auf eine Mindesttemperatur gebracht wird, um in etwa gleichbleibende Bedingungen beim Schmelzen und Abkühlen des aufgebrachten Baumaterials sicherzustellen.

Um den Einfluss der Temperatur auf die Komponenten der Positionierungsvorrichtung auf ein Mass zu reduzieren, dass dadurch veränderte Dimensionen eine vorgegebene Toleranz nicht überschreiten, wird vorgeschlagen, zwischen der Bauplattform, die sich in der Regel als ein "oben" angeordnetes, flächiges Element darstellt, und dem unteren Verbindungselement, das eingerichtet ist, um mit der Positionierungsvorrichtung verbunden zu werden oder auch einen Teil derselben darstellt, eine Isolation anzuordnen. Diese Isolation muss darüber hinaus neben der Abschirmung gegen die Wärmeeinwirkung auch formstabil sein, damit die Bauplattform exakt den Bewegungen der Positionierungsvorrichtung erfolgt.

Mit anderen Worten soll die Isolation die Prozesswärme, die durch das additive Fertigungsverfahren in das System eingebracht wird, sowie auch allfällige weitere Wärme, z.B. durch eine zusätzliche Heizung im Arbeitsbereich, von der Positionierungsvorrichtung wenigstens so gut abblocken, dass die Positionierungsvorrichtung und bevorzugt daneben weitere um und unter der Positionierungsvorrichtung befindliche Komponenten des Bearbeitungs- oder Herstellungssystems, funktionsfähig bleiben, insbesondere auch ihre Genauigkeit und Bewegungsfähigkeit nicht über ein zulässiges Mass hinaus beeinträchtigt wird. Solche zusätzlichen Komponenten können z.B. Träger für die Positionierungsvorrichtung wie ein weiterer Drehtisch oder ein Maschinentisch sein.

Bevorzugt ist zwischen Bauplattform und dem Verbindungselement eine Heizung angeordnet, um die Bauplattform vor Starten des Herstellungsprozesses auf eine vorgegebene Arbeitstemperatur zu erhitzen.

Für Temperaturunterschiede, die ein bestimmtes Mass überschreiten, das durch die Qualität und Ausführung der Isolationsschicht vorgegeben ist, ist optional eine Zwangskühlung im Bereich der Isolation bzw. dem unteren Verbindungselement vorhanden. Diese forcierte Kühlung kann zum Beispiel ein Gebläse sein, ein anderes, an sich bekanntes, wärmeabführendes Element wie ein Kühlkörper, Kühlkanäle im Verbindungsteil oder dem Isolationsteil für ein Kühlmedium, Z. B. Luft, oder eine Kombination dieser Massnahmen.

Im Bereich der Erfindung ist die Bewegung, die eine Positionierungsvorkehrung wie z.B. ein Drehtisch oder ein Linearantrieb ausführt, allgemein in Vorwärts- und Rückwärtsrichtung möglich und ist jedenfalls verschieden von der langsamen unidirektionalen Bewegung in z-Richtung, die eine Plattform in einer additiven Fertigungsanlage ausführt, die die Herstellung eines Werkstücks in einem Pulverbad durchführt.

Die Erfindung wird weiter einem Anführungsbeispiel unter Bezugnahme auf die Figuren erläutert. Es zeigt:
- Figur 1: Prinzipielle Darstellung des Laserauftragschweissverfahrens;
- Figur 2: Seitenansicht (schematisiert) auf eine Laserauftragschweissvorrichtung;
- Figur 3: Schematischer Aufbau einer Bauplattformvorrichtung in Seitendarstellung;
- Figur 4: Schematischer Aufbau einer Bauplattformvorrichtung mit abgehobener Bauplattform;
- Figur 5: Räumliche Ansicht einer reellen Ausführung einer Bauplattformvorrichtung;
- Figur 6: Räumliche Ansicht von unten auf ein Heizungselement der Bauplattformvorrichtung ;
- Figur 7: Schnitt gemäss VII-VII in Figur 5 durch das abgenommene Bauplattformteil.

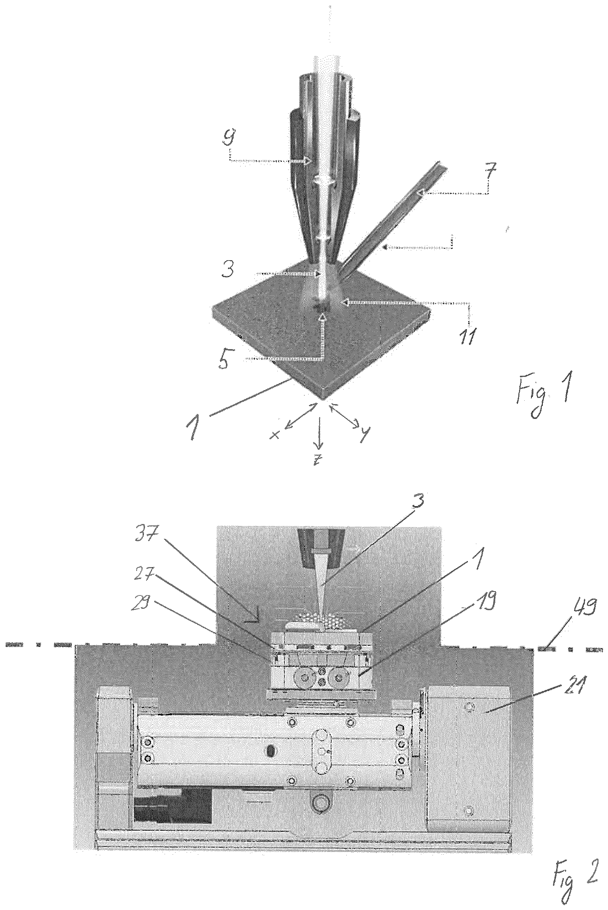

Figur 1 zeigt das Prinzip des Laserauftragschweissens. Auf einer Bauplattform 1 erzeugt ein Laserstrahl 3 den Arbeitspunkt 5, an dem eine derartig hohe Temperatur herrscht, dass das pulverförmige Baumaterial 7 schmilzt oder wenigstens die Partikel sich miteinander verbinden, um nach dem Abkühlen einen festen Körper zu bilden. Um eine Reaktion des Baumaterials 7 unter diesen hohen Temperaturen mit der Umgebung zu vermeiden, wird parallel zum Laserstrahl ein inertes Gas 9 zum Arbeitspunkt 5 geführt, der dort eine inerte Gasatmosphäre 11 erzeugt. Das Baumaterial 7 wird über eine Zufuhrleitung 15 dem Arbeitspunkt 5 gezielt zugeführt.

Die Bauplattform besteht üblicherweise aus einem Metall, insbesondere aus Aluminium oder Stahl.

Zum Erzeugen eines dreidimensionalen Objektes ist es offensichtlich nötig, die Arbeitsplattform 1 senkrecht zum Laserstrahl 3 in X- und Y- Richtung zu bewegen und auch entsprechend dem Höhenwachstum des Werkstücks in Z-Richtung senkrecht auf die X- und Y-Richtung, also parallel zum Laserstrahl 3. Dazu können noch Kippbewegungen um die X- oder Y-Achse oder auch beide treten, um eine optimale Ausbildung des Werkstücks bei speziellen Geometrien zu erreichen.

Wie in Figur 2 dargestellt, wird dazu die Bauplattform 1 mittels einer Nullpunktspannvorrichtung 19 an einem Drehtisch 21 angebracht. Eine Nullpunktspannvorrichtung 19 bietet den Vorteil, dass die Bauplattform 1 an genau definierter Position relativ zum Drehtisch 21 angebracht werden kann, ohne ein Eichen erforderlich zu machen.

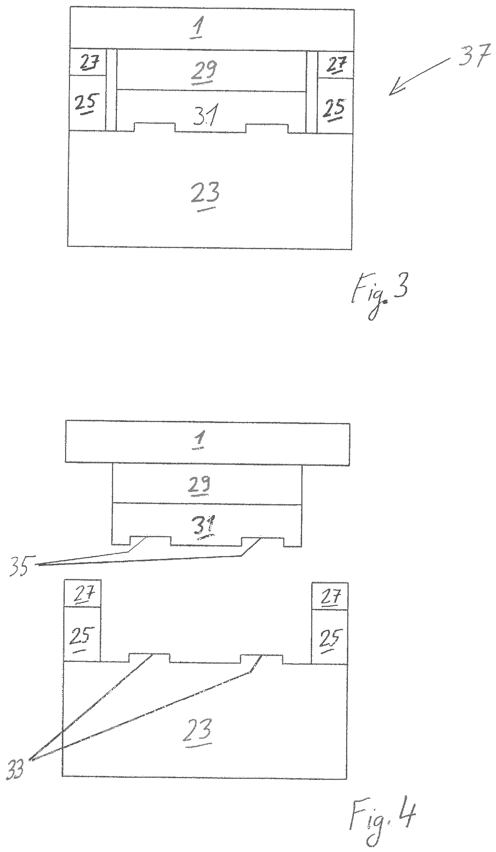

Die Figuren 3 und 4 zeigen das Schema der Aufspannung der Bauplattform auf einem Drehtisch, wobei vom Drehtisch nur der fest am Drehtisch angebrachte Trägerteil 23 der Nullpunktspannvorrichtung 19 dargestellt ist. Peripher am Trägerteil 23 ist eine Isolation 25 aufgesetzt und darauf eine Heizung 27. In dieser Verbindung von Heizung 27 und Trägerteil 23 ist eine lineare Bewegungsmöglichkeit mit Vorspannung auf grössere Länge enthalten, um die Heizung 27 an die Unterseite der Bauplattform 1 anzudrücken. Die lineare Bewegungsmöglichkeit kann z.B. eine lose Befestigung der Isolation 25 an der Heizung 27 mit linearer Führung sein, z.B. durch Schrauben mit Überlänge, auf denen die Heizung 27 oder die Isolation 25 verschiebbar ist. Die Vorspannung kann durch parallel oder um die Schrauben herum angeordnete Federelemente wie Spiralfedern oder Tellerfedern erzielt werden.

An der Unterseite der Bauplattform 1, also in Richtung auf das Trägerteil 23 zu, ist zunächst wiederum eine Isolation 29 und darauf ein Palettenabschnitt 31 angeordnet. Der Palettenabschnitt 31 bildet dabei das Gegenstück zum Trägerteil 23, um eine Nullpunktspannvorrichtung 19 auszubilden. Die Erhebungen 33 bzw. die Vertiefungen 35 deuten dabei die Positionierungselemente der Nullpunktspannvorrichtung an. Die gesamte Anordnung 37 stellt die Bauplattformvorrichtung dar.

Die untere Anordnung, die ausgelegt ist, um an einer Positioniervorrichtung wie einem Drehtisch (21) angebracht zu werden, kann als Spannfutter bezeichnet werden. Die in Fig. 4 nach oben davon abgesetzte Anordnung (Bauplattform 1, Isolationsteil 29, Palettenabschnitt 31) kann Palette genannt werden.

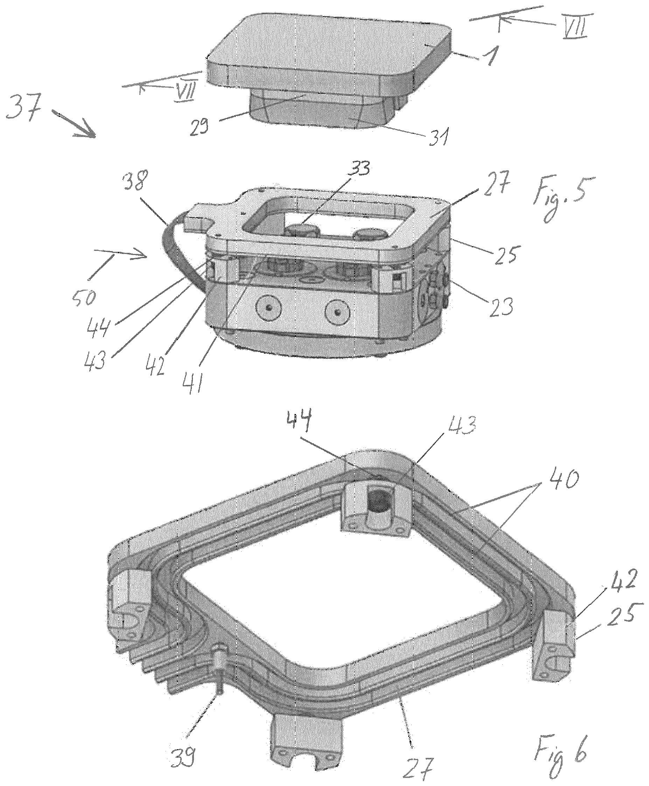

Die Figuren 5 bis 7 zeigen eine bevorzugte Ausführungsform einer solchen Bauplattformvorrichtung 37. Die meisten oben erläuterten Bezugszeichen finden sich auch hier und bezeichnen die entsprechenden Konstruktionselemente. Figur 5 entspricht dabei im Wesentlichen der Figur 4. Zusätzlich erkennbar ist das Flachbandkabel 38, das von der Heizung 27 in das Trägerteil 23 hinein überläuft. Das Flachbandkabel 38 dient einerseits der Stromversorgung der Heizung 27 und enthält weiterhin Messleitungen, um mittels Temperatursensoren 39 (hier nur einer, siehe Figur 6) die Temperatur an der Heizung 27 zu messen und damit regeln zu können.

Eine erste Möglichkeit des weiteren Verlaufs der Leitungen des Flachbandkabels 38 besteht in einer Führung in das Innere der Hohlwelle des Drehtischs 21. Nicht ausgeschlossen ist aber auch, das Flachbandkabel direkt von der Heizung 27 nicht in das Trägerteil 23, sondern direkt zu einer externen Steuerung (nicht dargestellt) zu führen.

Genauer zeigt Fig. 6 die Nuten 40 in der Heizung 27, in denen die elektrischen Heizschlangen (nicht dargestellt) verlaufen. Die Nuten 40 werden mit einem Deckel 41 abgedeckt.

Die Isolation 25 für die Heizung 27 besteht hier aus den vier unten an der Heizung 27 befestigten Distanzkörpern 42 aus einem Keramikmaterial, das einen hohen Wärmewiderstand bietet. Die Körper der Isolation 29 sind mittels Schrauben 43 an die Heizung 27 angeschraubt. Denkbar sind andere Befestigungsmöglichkeiten. Sie müssen jedoch den hohen Temperaturen bis zu mehreren hundert Grad Celsius standhalten und dabei geometrisch hinreichend stabil bleiben, um den Kontakt der Heizung 27 mit der Bauplattform 1 aufrecht erhalten zu können.

Die Schrauben 43 stellen dabei keine feste Verbindung der Distanzkörper 42 mit der Heizung 27 her, sondern weisen eine überschüssige Länge auf, so dass die Distanzkörper 42 auf dem Schaft der Schrauben 43 verschiebbar sind, also die Distanz zwischen Heizung 27 und den Distanzkörpern 42 in Grenzen veränderbar ist. Die längenveränderliche Verbindung ist durch Spiralfedern 44 um die Schrauben 43 herum in Richtung auf grössere Länge vorgespannt, so dass die Heizung 27 im zusammengesetzten Zustand (Figg. 2, 3) an die Unterseite der Bauplattform 1 angedrückt wird..

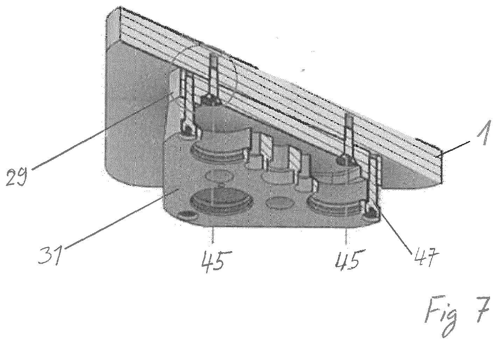

Die Isolation 29 besteht im Wesentlichen ebenfalls aus einem solchen keramischen Material und ist wie in Figur 7 dargestellt mittels Schrauben 45 an der Bauplattform 1 befestigt. Der Palettenabschnitt 31 der Nullpunktspannvorrichtung 19 ist ebenfalls mit Schrauben 47 an der Isolation 29 angebracht. Die Schrauben 47 sind jedoch hinreichend gegenüber den Schrauben 45 versetzt in der Isolation 29 angeordnet, dass eine Wärmebrücke zwischen diesen Schrauben vermieden wird. Die Isolation 29 stellt eine für die exakte Positionierung wesentliches Teil dar und muss daher daher eine formstabile Verbindung zwischen Bauplattforml und Palettenabschnitt 31 herstellen. Die Verwendung von keramischem Material für bzw. in der Isolation 29 erfüllt diese Forderung. Vorteilhaft sind dafür Materialien mit niedriger thermischer Dimensionsänderung, insbesondere kleiner als Stahl, und niedriger Wärmeleitfähigkeit.

Denkbar ist, unterstützend zu den Keramikteilen anderes Isolationsmaterial, wie Steinwolle oder ähnliches zu verwenden, um die Isolationswirkung zu verstärken. Geometrisch stabile Keramikteile sind jedoch in einem derartigen Anteil am Gesamtisolationsmaterial der Isolation 29 vorhanden, dass die Bauplattform 1 stabil und positionsgenau mit der Nullpunktspannvorrichtung 19 verbunden ist.

Die Bauplattformvorrichtung 37 gewährleistet, wie in Figur 2 mit der Trennlinie 49 angedeutet, eine Trennung des "heissen" Abschnitts oberhalb der Linie 49, in dem sich im Wesentlichen die Bauplattform 1 und die übrigen Teile der Maschine der additiven Fertigung befinden, vom "kühlen" Teil unterhalb der Linie 49, in dem sich der Drehtisch 21 befindet. Durch diese thermische Entkopplung ist gewährleistet, dass die Präzision durch die hohen Temperaturen, die an der Bauplattform 1 während der Herstellung herrschen, nicht beeinträchtigt wird. In der Simulation hat sich ergeben, dass ohne weitere Massnahme bis zu Temperaturen von 250 °C an der Bauplattform bzw. der Heizung 27 maximal zu einer noch zulässigen Temperatur von 100 °C am Trägerteil 23 führen.

Genügt diese Isolationswirkung nicht, so kann durch einen Luftstrom (siehe Figur 5) auf die Bauplattformvorrichtung 37 unterhalb der Bauplattform 1 eine Kühlung der Teile unterhalb der Linie 49 auf eine zulässige Temperatur erzielt werden. Denkbar sind zusätzliche Massnahmen, um die Teile der Bauplattformvorrichtung auf Seiten des Drehtischs 21 relativ zu den Isolationen 25, 29 verstärkt zu kühlen, wie zusätzliche Kühlflächen, Zufuhr von Kühlluft durch ein Gebläse, Kühlkanäle in diesen Teilen, Kühlkanäle in den Isolationsteilen, oder Kombinationen davon. Kühlkanäle können für die zugeführte Kühlluft oder ein andere Kühlmedium ausgelegt sein.

Die Bauplattvorrichtung reduziert die Spannungen, die durch die hohen Temperaturen im Arbeitpunkt und seiner Umgebung auftreten, indem die Temperaturdifferenz zu den umliegenden und insbesondere darunter liegenden Teilen wesentlich verringert wird.

Durch die geringere Temperaturdifferenz in der z-Richtung, also zwischen übereinander liegenden Teilen des Werkstücks, aber auch insbesondere eine Bauplattform, wird auch eine Durchbiegung vermieden oder wenigstens wesentlich verringert, die durch die unterschiedliche thermische Ausdehnung in verschiedener Zone wegen eines Temperaturgradienten in z-Richtung auftritt.

Aus der vorangehenden Beschreibung eines Ausführungsbeispiels sind dem Fachmann Abwandlungen und Ergänzungen zugänglich, ohne den Schutzbereich der Erfindung zu verlassen, der durch die Ansprüche definiert ist. Denkbar ist unter anderem:
- Statt einer Nullpunktspannvorrichtung wird ein anderes Verbindungssystem verwendet. Eine Nullpunktspannvorrichtung bietet den Vorteil, dass eine Bauplattform mit vorgegebener Positionierung sowohl aus der Fertigungsanlage entnommen und anderen Bearbeitungsschritten zugeführt werden kann wie auch der umgekehrte Vorgang, wobei zeitraubendes Justieren oder Ausmessen der genauen Position vermieden wird.
- Statt Schrauben 43, 45, 47 sind andere Verbindungsmittel denkbar, die an sich dem Fachmann bekannt sind.
- Statt Spiralfeder 44 zum Vorspannen der längenveränderlichen Verbindung zwischen Träger 23 und Heizung 27 sind andere Federlemente denkbar, z.B. Tellerfedern, Die Federelemente können auch an anderen Stellen angebracht sein bzw. andersartig als die Schrauben oder allgemein Verbindungselemente umgebend.
- Die Isolation 25 für die Heizung 27 muss nicht zur geometrisch stabilen Verbidnung zwischen Bauplattform und Positionierungsvorrichtung (Drehtisch 21) beitragen und kann aus anderen, flexibleren Elementen oder Materialien bestehen und muss nicht exakt bezüglich des Trägerteils 23 bzw. der Spannvorrichtung 19 fixiert sein.
- Die Positionierungsvorrichtung ist motorisch angetrieben oder manuell einstellbar.
- Das Plattformteil ist reduziert auf Befestigungsvorkehrungen für ein bestehendes Werkstück, z.B. ein Werkstück, an dem durch additive Fertigung Bestandteile angesetzt werden oder mittels additiver Fertigung in Stand gesetzt wird, oder auch für ein (z. B. manuell zu betätigendes) Spannmittel (Schraubstock, Formbacken, Spannpratzen). Die Befestigungsvorkehrungen sind am Isolationsteil ausgebildet, wie z.B. Gewindelöcher, an denen das Werkstück befestigt wird.
- Das Bauplattformteil ist ein Spannmittel (z.B. Schraubstock, Spannpratzen oder Formbacken), um ein Werkstück, das wie oben nachbearbeitet werden soll, an der Bauplattformvorrichtung manuell aufzuspannen.
- Die Bauplattformvorrichtung wird ausser in additiven Fertigungsanlagen in subtraktiven Bearbeitungsanlagen und Anlagen, die hybrid für additive und subtraktive Fertigung ausgelegt sind, eingesetzt, soweit Laserauftragschweissen angewendet wird.
- Für ein automatisiertes Be- und Entladen, z.B. das Entnehmen aus der additiven Fertigungseinheit und den Transfer zu einer Nachbearbeitungseinheit, ist die Bauplattformvorrichtung mit Greifmitteln, z.B. eine Greifnut am Rand, ausgestattet. Solche Massnahmen sind z. B. in der WO-A-2019/092098 beschrieben. Vorzugsweise handelt es sich um eine Nut oder Rippe, insbesondere für eine Schwalbenschwanzverbindung.

## Patentansprüche

1. Bauplattformvorrichtung (37), die eingerichtet ist, an einer Positionierungsvorrichtung (21), bevorzugt einem Drehtisch, zum Positionieren eines Werkstücks angebracht zu sein, **dadurch gekennzeichnet, dass** die Bauplattformvorrichtung ein oben angeordnetes Bauplattformteil (1), umfassend ein fest angebrachtes Plattformteil oder Befestigungsvorkehrungen für ein Plattformteil oder ein Werkstück, und ein unten angeordnetes Verbindungsteil (19) umfasst, zwischen denen ein formstabiles Isolationsteil (29) geringerer thermischer Leitfähigkeit angeordnet ist, und das Verbindungsteil eine lösbare Verbindung, bevorzugt ein Aufspannsystem, weiter bevorzugt ein Nullpunktspannsystem, umfasst, so dass die Bauplattformvorrichtung über das Verbindungsteil an der Positionierungsvorrichtung in fester relativer Position anbringbar ist, jedoch die Wärmeübertragung vom Bauplattformteil auf das Verbindungsteil verringert ist.

2. Bauplattformvorrichtung (3/) gemäss Anspruch 1, **dadurch gekennzeichnet, dass** das Verbindungsteil (19) einen oberen Verbindungsabschnitt (31) und einen unteren Verbindungsabschnitt (23) aufweist, wobei die Verbindungsabschnitte lösbar miteinander verbunden sind, dass der obere Verbindungsabschnitt auf das Isolationsteil 29 folgt und dass an der Peripherie des unteren Verbindungsabschnitts und im Wesentlichen umgebend den oberen Verbindungsabschnitt und die Isolation (29) eine Isolationsringanordnung (25) und auf dieser eine Heizeinrichtung (27) angeordnet sind, um das Bauplattformteil (1) erwärmen zu können, jedoch eine Erwärmung der unterhalb der Isolationsringanordnung liegenden Teile des Verbindungsteils (19) unterdrückt wird.

3. Bauplattformvorrichtung (37) gemäss einem der Ansprüche 1 bis 2, **dadurch gekennzeichnet, dass** das Isolationsteil (29) zu einem wesentlichen Teil, bevorzugt vollständig, aus einem steifen Isolationsmaterial, bevorzugt einem keramischen Material niedriger thermischer Leitfähigkeit, besteht, so dass Bauplattformteil (1) und oberer Verbindungsteilabschnitt (31) positionsgenau verbunden sind.

4. Bauplattformvorrichtung (37) gemäss einem der Ansprüche 2 bis 3, **dadurch gekennzeichnet, dass** die Isolationsringanordnung (25) aus einer Anzahl Distanzkörper (42), bevorzugt mindestens drei, weiter bevorzugt mindestens vier Distanzkörper (42), aus einem steifen Isolationsmaterial besteht.

5. Bauplattformvorrichtung (37) gemäss Anspruch 4, **dadurch gekennzeichnet, dass** die isolierenden Distanzkörper (42) gleichmässig über den Umfang der Heizringanordnung (27) verteilt sind, um sie gleichmässig am unteren Verbindungsabschnitt (23) abzustützen.

6. Bauplattformvorrichtung (37) gemäss einem der Ansprüche 2 bis 5, **dadurch gekennzeichnet, dass** in der Verbindung von unterem Verbindungsabschnitt (23) und Heizung (27), bevorzugt zwischen Isolationsringanordnung (25) und Heizung, ein mit wenigstens einem Federelement (44) auf grössere Länge vorgespanntes wenigstens linear bewegliches Element (43) vorhanden ist, um die Heizung an die Bauplattform (1) anzudrücken.

7. Bauplattformvorrichtung (37) gemäss einem der Ansprüche 1 bis 6, **dadurch gekennzeichnet, dass** das Bauplattformteil (1) ausgebildet ist, um als Bauplattform eines Verfahrens der additiven Fertigung zu dienen, insbesondere für das Laserauftragschweissen.

8. Bauplattformvorrichtung (37) gemäss einem der Ansprüche 1 bis 7, **dadurch gekennzeichnet, dass** das steife Isolationsmaterial eine thermische Leitfähigkeit von höchstens 5 W/(K m) [Watt pro Kelvin und Meter] aufweist, bevorzugt höchstens 3, 1, 0.5, 0.3 oder 0.1 W/(K m) mit steigender Bevorzugung.

9. Bauplattformvorrichtung (37) gemäss einem der Ansprüche 1 bis 8, **dadurch gekennzeichnet, dass** der Isolationsteil (29) so ausgebildet sind, dass in Arbeitskonfiguration bei zusammengesetztem Verbindungsteil (19) die Temperatur am einen Teil (23) des Verbindungsteils, das mit der Isolation (29) fest verbunden ist, 100 °C nicht übersteigt, solange die Temperatur des Bauplattformteils (1) nicht eine Temperatur von mindestens 200 °C, bevorzugt mindestens 225 °C und weiter bevorzugt mindestens 250 °C übersteigt.

10. Anlage der additiven Fertigung mit einer Positionierungsvorrichtung (21), bevorzugt einem Drehtisch mit mindestens einer Bewegungsachse ausgewählt aus mindestens einem von mindestens einer rotatorischen und mindestens einer translatorischen Achse, und einer daran angebrachten Bauplattformvorrichtung (27) gemäss einem der Ansprüche 1 bis 9.
